# EUROPEAN PATENT APPLICATION

(11) **EP 1 286 260 A1**
(43) Date of publication of application: **26.02.2003**
(21) Application number: 01402207.3
(22) Date of filing: 22.08.2001
(51) Int. Cl.: G06F 9/44

(54) **Method for translating a HAVi DDI user interface to the HTML world and vice-versa**

(71) Applicant: Thomson Licensing S.A., 92648 Boulogne Cedex (FR); DEUTSCHE THOMSON-BRANDT GMBH, 30625 Hannover (DE)
(72) Inventor: Henry, Jean-Baptiste, 35520 Melesse (FR); Brune, Thomas, 30449 Hannover (DE)
(74) Representative: Kohrs, Martin

(57) **Abstract**

The invention concerns a method for translating the User Interface from the HAVi DDI world to the HTML world and vice-versa.

## Description

Be it in the areas of television, home networking or the Internet, new communication technologies are being developed and introduced at a fast pace. Each environment boasts different protocols, stacks and graphical interfaces.

There appears the need of rendering these different environments interoperable. The HAVi specification focuses on the interoperability of consumer electronics devices in the home environment. It may prove useful to be able to control HAVi devices through means external to the HAVi network, and in particular through an internet-enable device which would access the HAVi network through the Internet. Conversely, the control of a device connected to the Internet using a HAVi device should also be possible.

Looking at the user interfaces in each area, HAVi currently proposes three different mechanisms. One of the mechanisms, called Device Driven Interaction, or 'DDI', allows a device (called the DDI target) to display its user interface through another device (called the DDI controller).

On the Internet, HTML is widely used, eventually supplemented by different plug-ins.

Currently, no possibility exists for exchanging user interface data between these two environments.

The invention concerns a method for translating the User Interface from the HAVi DDI world to the HTML world and vice-versa.

Other characteristics and advantages of the invention will appear through the description of a non-restrictive embodiment, explained with the help of the enclosed drawings.
Figure 1 is a prior art diagram of the information exchanges between a DDI controller and a DDI target.
Figure 2 is a block diagram of a network comprising a HAVI domain and an Internet domain, in case a web user accesses a HAVi target.

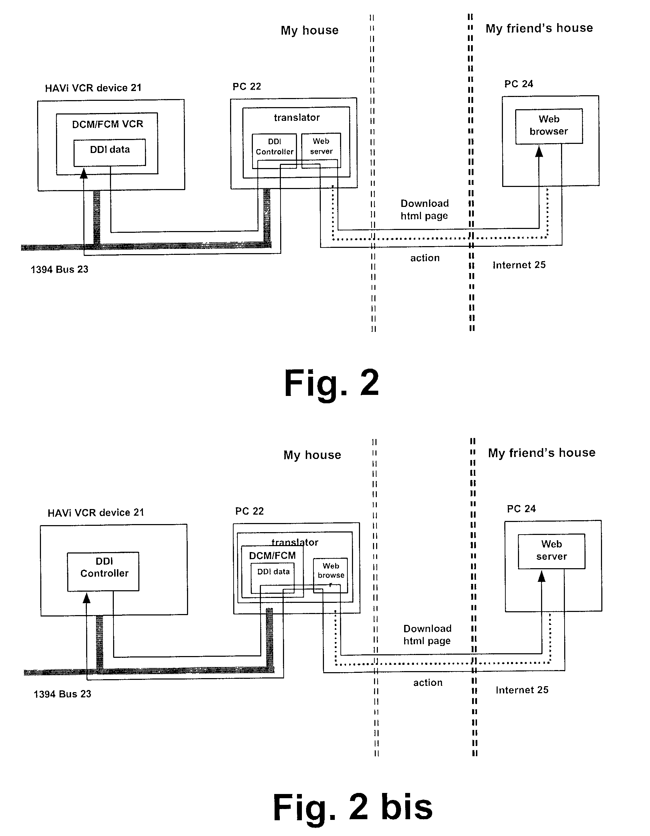

Figure 2bis represents the network of figure 2 when a HAVi user accesses a web target.

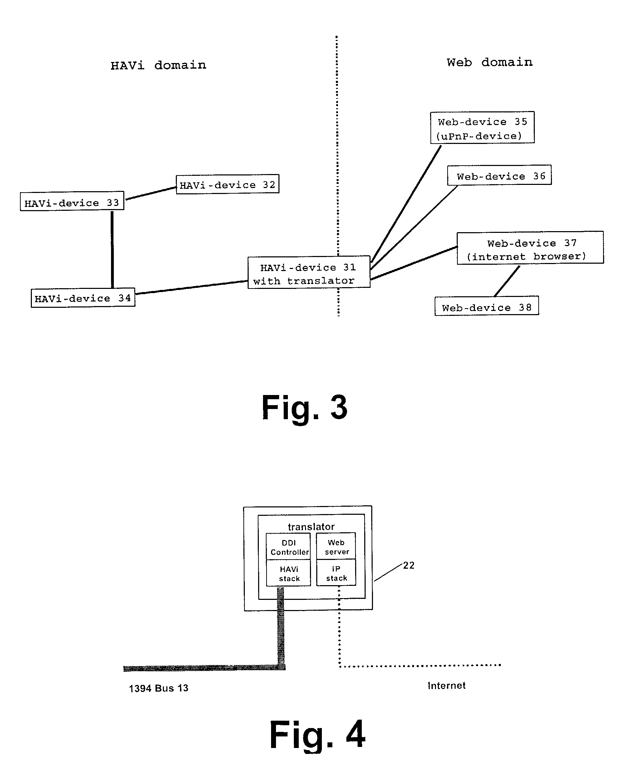

Figure 3 is a block diagram of another network formed by the interconnection of a HAVi domain and an Internet domain.
Figure 4 is a diagram of the software architecture of a device of figure 3 comprising the translator application according to the present embodiment.

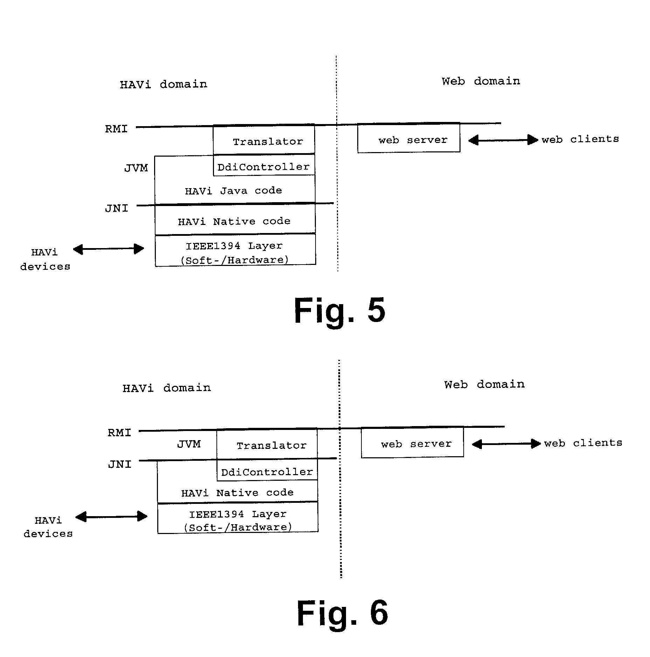

Figure 5 is a diagram of a first implementation of the software stack in the device of figure 3 using RMI, and in the case a DDI controller of the device is based on Java.

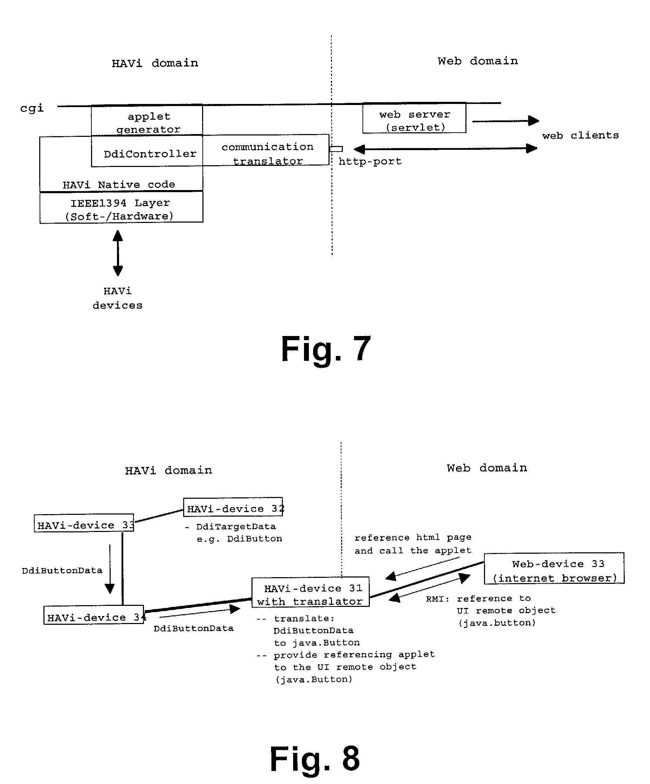

Figure 6 is a diagram of a second implementation of the software stack in the device of figure 3 using RMI, and in the case a DDI controller of the device is a native controller.
Figure 7 is a diagram of a third implementation of the software stack in the device of figure 3, when a cgi API is used.
Figure 8 is diagram illustrating the steps for setting up a user interface provided by a HAVi device on an Internet device, according to the present embodiment of the invention.

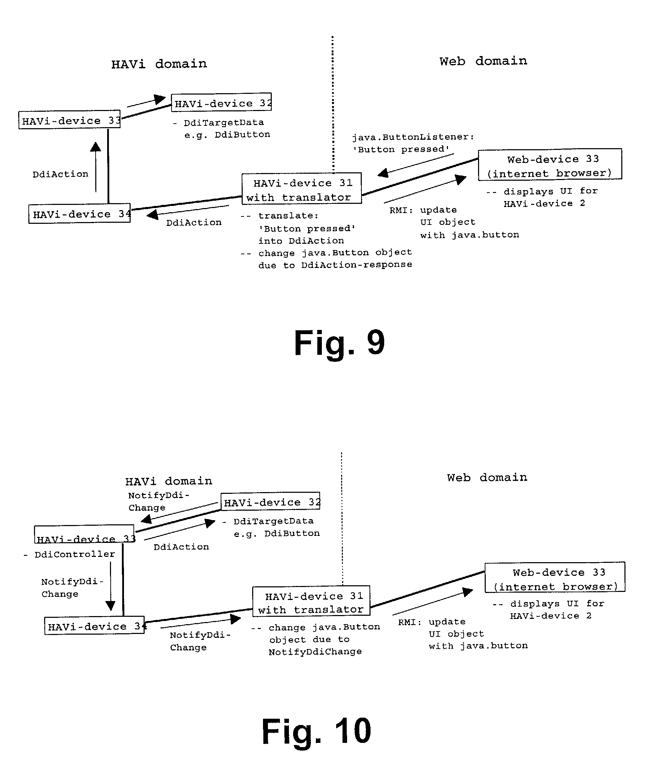

Figure 9 is a diagram illustrating of the steps carried out when an action is initiated from the Internet domain, according to the present embodiment of the invention.
Figure 10 is a diagram illustrating the steps carried out for spreading a notification from the HAVi domain to the Internet domain, according to the present embodiment.

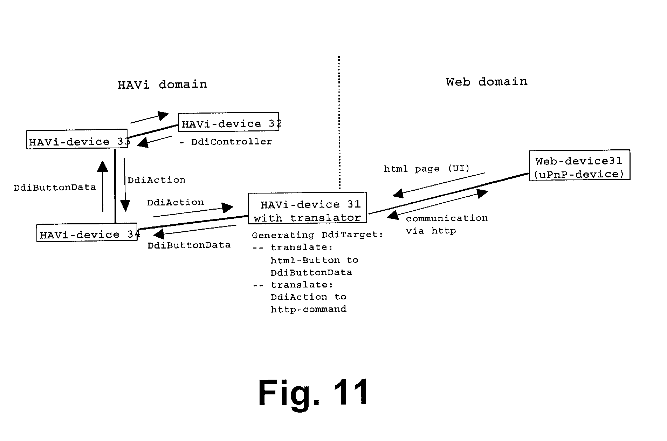

Figure 11 is a diagram illustrating the steps for setting up a user interface provided by an Internet device on a HAVi device, according to the present embodiment.

The embodiment of the invention is based on one side on the HAVi specification (Home Audio/Video interoperability), and on the other side on Internet related technologies, such as UPnP (Universal Plug and Play), HTML (HyperText Markup Language) and HTTP (Hypertext Transfer Protocol).

Although these documents are well known, some references of the current versions are given for information:
The HAVi 1.1 specification (published May 15, 2001) is available from HAVi Inc., 2694 Bishop Drive, Suite 275 San Ramon, CA 94583, USA.
The UPnP 1.0 specification is available from Microsoft Corp.
The HTML 4.01 document is available from the W3C consortium (MIT in the USA, INRIA in France and Keio University in Japan).
The HTTP Protocol is available from the IETF (Internet Engineering Task Force).

HAVI defines a number of system elements (CMM1394, Messaging System, Registry, Event Manager, Stream Manager, Resource Manager and DCM Manager). They provide a way to manage the HAVi network over an IEEE 1394 serial bus. These elements will be described only if needed for the comprehension of the invention.

HAVi further defines the following elements:
- The DCMs: Device Control Modules are the software representation of a controlled device on the network. There is one DCM per device.
- The FCMs: Functional Control Modules are the software representation of a functionality on the network. A FCM is contained in a DCM (the functionality is provided by a device), and a DCM can contain several FCMs (e.g. a D-VHS can provide a Tuner functionality and a VCR functionality).
- The applications: a software element which generally provides a user interface and allows control of devices and of the network.
- The Havlets: a Havlet (HAVi applet) is a Java bytecode contained in a DCM (or elsewhere), which can be downloaded to a controller running a Virtual Machine (such a controller is called a FAV type device - Full Audio/Video device), in order to provide a user interface related to the DCM. This mechanism allows the manufacturer of the DCM to distribute its own look and feel across the network.
- A DDI Controller: Its aim is to display the DDI data provided by a DDI Target (i.e. a DCM).

HAVi defines three user interface mechanisms to control the network:

### 1. Native user interface:

The native user interface is the user interface provided directly by the controller device to the user in a proprietary way. The user interface may be based on Java, Visual Basic, Windows, Linux, etc. For example, the navigator of the Home Network configuration (i.e. the initial user interface entry point for having access to the complete network and to user interfaces of all other devices) must be a native user interface. In addition, the user interface for one specific device within the network can also be native (e.g. for controlling a standardized FCM). For example, to control a VCR (a VCR API is defined by HAVi), the native user interface can display the buttons, the time, ...

### 2. DDI user interface:

DDI stands for Data Driven Interaction. A HAVI software element may provide a user with the ability to control another software element using the HAVi DDI mechanism. The first software element is called the DDI Controller and the second software element the DDI Target. The DDI Target is in fact the controlled DCM. The DDI Target provides "DDI data", which is a description of a _user interface to be presented to the user. This DDI data indicates the state of the DDI Target and defines how the DD Controller may send commands.

Furthermore, DDI is a scalable process. With the same DDI data, a very simple display (a mobile phone for example) can show only some text buttons while a more powerful device (like a PC) can show picture buttons. This is possible because the DDI data provides at least basic information (e.g. button labels) and optionally more complex information (e.g. pictures). The DDI Controller decides how to display DDI data on its screen.

The DDI Controller has no knowledge of functionalities of the DDI Target. It transmits messages (e.g. 'DdiAction') to the DDI Target in response to user commands. On the DCM side, the DDI Target translates the coded DdiAction into a device function. For example, the DDI Controller sends a DdiAction of the type "button 5 pressed" to a VCR DDI Target, and the DDI target translates it into "Play".

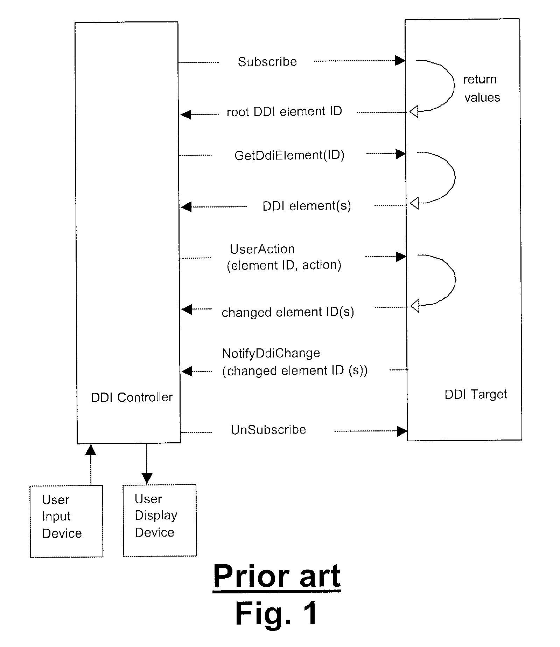

Figure 1 illustrates the different exchanges between a DDI Controller and a DDI Target.

### 3. Havlet:

The Havlet is a part of a DCM, a Java bytecode which can be downloaded to any controller running a Virtual Machine. This bytecode provides the user interface of the DCM. Through this, the manufacturer of the DCM can impose its own look and feel.

When a controller installs a Havlet, its own application does not know anything about what the Havlet does, which commands it sends etc. The Havlet has the complete responsibility for the graphical control of the target device.

For controlling and displaying information of the multimedia home network from the world wide web, or for controlling internet devices from the home network, a graphical translator between the DDI mechanism and the internet technologies (XML, HTML, http, WML, Java enhancements) is proposed. The translator works in both directions:

It translates HAVi DDI graphics into web graphics and displays them on a web page. The actions of a user on the graphics of the web page are translated back into HAVi commands (DDI user actions) on the HAVi network. This allows an Internet web page external to the Home Network, for example a UPnP device connected to the Internet, to control a HAVi device.

It translates a web page into DDI data. This allows a controller device of the Home Network which is not connected directly to the Internet to access web pages. In particular, it allows translation of certain UPnP graphics (based on HTML) into HAVi graphics. A HAVi device can easily control a UPnP device and vice-versa.

The translator has the function of translation the graphical part of the user interface and the function of translating the actions and control data of the user interface. A complex bridge device which would represent devices or functions of one network on the other network is then not needed.

### More specifically, the command and control translation comprises:

Translation of the 'DdiAction' mechanism to the web domain, so that the user may control a HAVi device from a web page;

Translation of the 'NotifyDdiChange' mechanism to the web domain, so that the user may see the HAVi device's status change on his translated user interface in the web domain (an alternative to the 'NotifyDdiChange' are the 'StateChanged'-events of several DCMs which consists of a deeper layer notification mechanism within the HAVi stack);

Translation of an action mechanism from web pages to the HAVi domain, so that the user may control web pages with 'DdiAction' commands;

Translation of a notification mechanism within the web to the HAVi domain, so that the user may see changes on web pages in his translated user interface in the HAVi domain.

Here web pages can also mean a UPnP device.

Figure 2 is a block diagram of a two-domain network, in which the first domain is of the HAVi type and the second domain is of the IP type. The HAVi domain comprises a HAVi VCR device 21 and a personal computer 22, both devices being connected to an IEEE 1394 bus 23. The device 21 comprises a VCR DCM and FCM. The device 22 comprises the translator according to the present embodiment, and is also connected to the Internet 25, to which a device - here a personal computer 24 - comprising a Web browser is connected. The translator comprises a DDI Controller and a web server part.

A typical user control process will now be described, in order to illustrate the translator's role in a real environment.

A user desires to access the VCR 21 from his friend's home, in order to record a movie he has just heard about. He accesses his home HAVI network using the web browser of the device 24. The device 22 acts as a web server in this case, and has an IP-address known to the user. The device 22 requests the DDI data from the VCR 21, translates it into web page format and sends it to the remote computer 24, which displays it on its browser.

The user has then access to VCR controls presented by the browser on the web page created by device 22. He can also see the status of the VCR. The user activates the 'Record' button. A corresponding message is sent to the web server part of the translator. The translator converts the message into a DDI user action. This user action is sent to the DDI Target of the VCR device 21, which acts accordingly.

Figure 3 is a block diagram of another two-domain network, comprising a HAVi domain and an Internet domain. In the case of this network, the HAVi domain comprises devices 31 to 34, where device 31 is the HAVi device incorporating the translator. The Internet domain comprises, as example, four Internet devices 35 to 38, where device 35 is UPnP compliant and device 37 hosts an Internet browser.

Figure 4 illustrates a simplified software architecture of the HAVi device 31: the translator application sits atop the HAVi stack and the DDI Controller on the HAVi side and atop the Internet Protocol (IP) stack and the web server layer on the other side.

The translator is a piece of software used in conjunction with the DdiController. It is present on an HAVi device which also comprises a DdiController. Due to the fact that the aim in the present embodiment is to operate with Internet devices, a web server is provided within the same HAVi device 31. The communication path runs from a web client - for example the device 37 incorporating the browser - to the web server and, via an appropriate Application Programmable Interface (API) to an application (e.g. the HAVi Software/Hardware Stack) and back. The web server and web client are considered as residing in the web domain and the application is - in the present embodiment - in the HAVi domain, in one of the devices 31 to 34.

There is the need for translating graphical objects, actions and notifications between the two domains, where:
1) Graphical objects are e.g. panels, text, buttons, ...
2) Actions are messages generated by activating user interface elements. This may require a change of appearance of a graphical object such as a button.
3) A notification is a message informing a device of an event on the network. This may cause a change of appearance of a graphical object.

The problem is to send an action or notification message through the mentioned API from the web server and the application. A look at the server/client side of this problem shows:
1) While handling simple html-pages in the web domain, it is possible to have actions on html-based objects and according re-actions but there is no simple notification possible from the Internet server to update the html pages.
2) A simple but rough solution could be that if there is a notification event in the HAVi domain, the application provides a new html-object (which a changed appearance) and in the web domain the client polls the server for possible html changes every few seconds.
3) A more elegant solution for the notification problem is to use more intelligent languages/scripts in the web domain in addition to an intelligent API between the web- and the HAVi domain:
   Possible languages/script in the web domain are: JavaScript, Applets.
   Possible solutions for the API between applications and the web server are: Java Remote Method Invocation (RMI), common gateway interface (cgi) and CORBA.
   With these solutions the application can have a notification to the client.
   One very well designed API is the RMI. Here the HAVi application interacts with a Java Virtual Machine (JVM) and the Java Native Interface (JNI) has to be used to add the higher layer Java application to the lower layer native application. Figures 5 and 6 respectively show two models dependent on the DdiController implementation (java or native).
   Other possibilities for the API between the web server and the application are the use of the cgi (Figure 7). Here the user interface (an applet to be downloaded by the internet client) is provided via cgi. Communication (action handling) is done via cgi (applet-/ servlet-communication) and via a fixed http-port (notification handling). This direct web link to the communication translator is necessary because of the missing update mechanism from web server to web client).

This application gives a deeper description of its usage of the RMI (in principle the usage of the cgi method is very close to that; a third known solution, close to RMI, is the usage of CORBA).

Coming back to the translation mechanism: in RMI, translation of:

### 1) Graphical elements:

Is to write java objects for the according DdiElements (e.g. DdiPanel ? java.myPanel, DdiButton ? java.myButton, ...

### 2) Actions:

Is to set up an e.g. DdiAction.ACT_BUTTON command in the HAVi domain initiated from the Actionlistener of the java.Button object or a http-command from a html-button (web domain > HAVi domain).

And b translate a DdiAction.ACT_BUTTON from the HAVi domain into proprietary java-object-change-mechanism or into http-commands in the web domain. (HAVi domain > web domain).

### 3) Notifications:

Is to set up a NotifyDdiChange command in the HAVi domain initiated from UI change (java-object-change-mechanism or http-commands) in the web domain. (web domain > HAVi domain).

To translate a NotifyDdiChange in the HAVi domain into proprietary java-object-change-mechanism or into http-commands. (HAVi domain > web domain).

### (a) DDI to Web (RMI)

In this method,
1) The translator (DdiController) first subscribes to the HAVi-device 32 (DdiTarget) as a normal behavior in the HAVi domain.
2) During the following communication he fetches all Ul-elements ( e.g. DdiButtonData) fom HAVi- device 32 and translates them into the web domain (java.Button).
3) The translator then generates an applet which refers to the remote object of the Ul (java.Button). The remote object implements a web server and is located in the translator. The applet is provided in the web domain on an html-page.
4) A client (web device) is now able to reference the html page and to execute the applet, which is a reference to the UI of the DdiTarget device (HAVi-device 32).

Figure 8 illustrates this process.

Via RMI it is possible to implement actions from the client to the server:

At the server the action (e.g. Button pressed) is translated to the HAVi domain (DdiAction.ACT_BUTTON). (Figure 9). The DdiAction response changes the java.Button object at the translator site. It is updated at the client site, too.

Via RMI it is also possible to implement notifications (Figure 10):

A DdiAction.ACT_BUTTON, initiated by HAVi-device 33 in the HAVi domain causes a NotifyDdiChange from HAVi-device 32. This NotifyDdiChange is translated by the translator into a simple change of the remote object of the Ul (java.Button). Because the changed remote object is provided by the server (translator) every web client's reference of the Ul is changed, too.

### (b) Web to DDI (RMI)

To control a web device (UPnP device) from the HAVi domain is according to the above described method (Figure 11). Here the Ul is provided as an html-page (html-button) or applet (java.Button). The translator generates DdiTargetData out of it by e.g.: converting html- or java-Button to DdiButton. The Target is now normally accessible like any other DdiTarget by a DdiController in the HAVi domain. Its received DdiAction is translated into http-commands or into a proprietary java-object-change-mechanism for the web domain and changes the web button's appearance.

For example, when the user presses the DdiButton on the HAVi device 32, the translator converts it into an html-button form action, which is sent to the Web device 31 with a basic HTTP message.

Translation of DDI graphics between HAVi domain (HAVi) and Web domain (Web).

DdiElements for graphic to be translated are: DdiPanel, DdiGroup, DdiPanelLink, DdiButton, DdiBasicButton, DdiToggle, DdiAnimation, DdiShowRange, DdiSetRange, DdiEntry, DdiChoice, DdiText, DdiStatus, Ddilcon.

The according web elements are dependent on the presentation of the web page : if applets are used the appropriate java objects under java AWT are e.g. java.Button, java.List, java.Label; if html is used there are equivalent elements defined (e.g. with Forms).

Translation of DdiAction (HAVi) into user actions (Web).

'user actions' (e.g. Button pressed) in the Web domain are propagated as a communication between java objects or references (e.g.: applet - servlet communication) or it can be a pure Internet protocol communication (e.g. http-protocol).

Translation of user actions (Web) into DdiActions (HAVi).

Translation of NotifyDdiChange or sub layer notification like e.g. 'StateChange'-events (HAVi) into graphics update (applet or html) (Web).

Translation of changed graphics (Web) into NotifyDdiChanges (HAVi).

When a user (Web) calls an applet or web page which represents a Ul of a HAVi device, the translator (DdiController) 'subscribe' (HAVi command) the DdiTarget (HAVi).

When a user (Web) leaves an applet or web page which represents a Ul of a HAVi device, the translator (DdiController) 'unsubscribe' (HAVi command) the DdiTarget (HAVi).

The 'translator' is a layer which runs on a HAVi device with a DdiController and has an interface to the web domain (RMI, cgi, CORBA) as a web server.

### Remarks:

A device in the Web domain can be a UPnP device.

## Claims

1. Method for translating the User Interface from the HAVi DDI world to the HTML world and vice-versa.

2. Method according to the claim 1 where the DDI data built for a HTML page is done within a DCM proxy.

3. Method according to claim 1 where different technologies can be used (RMI, cgi, CORBA, applet-servlet, scripts).

4. Method for translating the action from the HAVi world to the IP world and vice-versa.

5. Method according to claim 4 where the DDI Action can be translated into a HTTP call, a RMI call, an applet-servlet call.

6. Method for translating the events from the HAVi world to the IP world and vice-versa.

7. Method according to claim 6 where the HAVi event can be a DDI notification or a state event direct notification.

8. Method according to claim 6 where the update of the HTML page can be by polling, by applet-servlet communication, by RMI call.

9. Method for having the DDI controller of the translator subscribing and unsubscribing to the DDI target upon reception of calls from the IP world reflecting the interest and uninterest into the DDI data.
